# EUROPÄISCHE PATENTSCHRIFT

(11) **EP 0 971 836 B1**
(45) Veröffentlichungstag und Bekanntmachung des Hinweises auf die Patenterteilung: **25.06.2003**
(21) Anmeldenummer: 98909261.4
(22) Anmeldetag: 31.03.1998
(51) Int. Cl.: B62B 13/04

(54) **BODENGLEITFAHRZEUG**
VEHICLE FOR GLIDING OVER THE GROUND
VEHICULE POUR GLISSER SUR LE SOL

(30) Priorität: 01.04.1997 CH 75197
(43) Veröffentlichungstag der Anmeldung: 19.01.2000
(73) Patentinhaber: Vontobel, Hansrudolf, 8704 Herrliberg (CH)
(72) Erfinder: Vontobel, Hansrudolf, 8704 Herrliberg (CH)
(74) Vertreter: Frei, Alexandra Sarah
(86) Internationale Anmeldenummer: CH9800121
(87) Internationale Veröffentlichungsnummer: WO98043862

(56) Entgegenhaltungen:
- CH-A- 504 876
- DE-A- 3 633 773
- US-A- 3 325 179
- US-A- 3 917 301
- US-A- 4 193 609
- US-A- 4 638 896

## Beschreibung

Die Erfindung betrifft ein Bodengleitfahrzeug, welches insbesondere als Schneesportgerät eingesetzt werden kann.

Bodengleitfahrzeuge der obigen Art sind bekannt. Ein solches zusammenklappbares monoskiartiges Bodengleitfahrzeug wird bspw. in US-3,917,301 offenbart. Es weist einen ca. 1.3 m langen, am vorderen Ende nach oben gebogenen Ski auf. Auf dem Ski ist eine zwei gekreuzte Stützelemente enthaltende Stützkonstruktion aufgesetzt, welche ein Zusammenklappen des Monoskis ermöglicht. Auf der Stützkonstruktion ist ein Sattel angebracht. Eines der Stützelemente ist derart verlängert, dass es nach vorn oben über den Sattel hinausragt, und sein oberes Ende ist als Haltebügel ausgebildet. Beim Benützen dieses Monoskis sitzt der Fahrer mit nach vorn geneigtem Oberkörper auf dem Sattel und hält sich ungefähr auf Brusthöhe am Haltebügel fest; seine Füsse sind mit je einem Kurzski ausgerüstet und sind in Berührungskontakt mit dem Boden. Dieser Monoski hat die Nachteile, eine geringe Sicherheit beim Fahren und eine geringe Handlichkeit beim Transport zu bieten. Die Fahrsicherheit ist deshalb gering, weil der Monoski schlecht steuerbar ist, lange Bremswege benötigt und der Haltebügel bei einem Sturz zu Verletzungen führen kann. Unhandlich ist der Monoski wegen seiner grossen Abmessungen und seines hohen Gewichts.

Aufgabe der Erfindung ist es, ein neuartiges Bodengleitfahrzeug, insbesondere ein Schneesportgerät mit mindestens einem Sitz und vorzugsweise genau einer Kufe zu schaffen, welches eine hohe Fahrsicherheit und Handlichkeit bietet. Dieses Bodengleitfahrzeug soll ausserdem ein bisher unbekanntes Fahrvergnügen bieten, wobei Vorteile von Skiern - Fähigkeit zum Fahren enger Kurven, gute Bremsbarkeit, Geländetauglichkeit - mit Vorteilen von Schlitten - Sitzen beim Fahren - kombiniert werden sollen.

Die Aufgabe wird gelöst durch das Bodengleitfahrzeug, wie es im unabhängigen Patentanspruch definiert ist.

Der Gleitteil besteht entweder aus genau einer Kufe oder aus mehreren unmittelbar nebeneinander angeordneten Kufen. Der Gleitteil ist mindestens so lang, dass er in Längsrichtung eine genügende Stabilität gewährt, jedoch höchstens so lang, dass das Bodengleitfahrzeug noch gut steuerbar ist. Die Breite des Gleitteils entspricht ungefähr derjenigen eines gewöhnlichen Skis und sollte bei Belastung durch eine Person ein übermässiges Einsinken in die Unterlage, bspw. in Schnee, verhindern. Der Gleitteil kann eigens für das erfindungsgemässe Bodengleitfahrzeug konstruiert sein, oder aber er kann aus einem im Handel erhältlichen Ski, Kurzski, Snowboard etc. bestehen.

Die Mittel zum Festhalten erlauben es dem Fahrer, sich während der Fahrt am Bodengleitfahrzeug zu halten und/oder das Bodengleitfahrzeug leichter zu steuern. Das Bodengleitfahrzeug ist zusammenklappbar oder zerlegbar, damit es beim Transport, in zusammengeklapptem Zustand, weniger Volumen einnimmt und einfacher getragen worden kann als in fahrbereitem Zustand.

Beim Fahren siezt der Fahrer im wesentlichen aufrecht auf der Sitzkonstruktion und schaut in Fahrtrichtung, so dass seine Füsse auf je einer Seite des Gleitteils den Boden berühren können. Um Fahrern mit unterschiedlichen Beinlängen das Fahren mit demselben Bodengleitfahrzeug zu ermöglichen und/oder das Bodengleitfahrzeug dem zu befahrenden Gelände, den Schneeverhältnissen etc. anzupassen, ist es vorteilhaft, wenn die Stützkonstruktion eine Verstellung der Sitzhöhe und/oder der Griffhöhe erlaubt. Auch eine Verstellung der Sitzkonstruktion und/oder der Mittel zum Festhalten in Längsrichtung kann vorgesehen werden.

Es ist dem Fahrer freigestellt, beim Fahren des erfindungsgemässen Bodengleitfahrzeuges Kurz- oder Extremkurzskier (wie sie etwa unter der Bezeichnung "Big foot" bekannt sind) an den Füssen zu tragen oder nicht. Gelenkt wird das Bodengleitfahrzeug hauptsächlich durch eine Gewichtsverlagerung, welche im wesentlichen dadurch zustande kommt, dass der Fahrer seinen Oberkörper zur Seite neigt. Zum Bremsen kann eine Bremsvorrichtung am Bodengleitfahrzeug vorgesehen sein. Eine solche Bremsvorrichtung kann bspw. als an der Stützkonstruktion drehbar befestigter Hebel ausgebildet sein, dessen oberes Ende von Hand betätigt wird und dessen unteres Ende in die Unterlage eingreift. Kompliziertere Bremsvorrichtungen könnten, ähnlich einer Fahrradbremse, einen an einem Griff drehbar befestigten Bremshebel aufweisen, von wo aus die Bremskraft bspw. über Kabel auf einen in die Unterlage eingreifenden Ritzer übertragen wird. Das erfindungsgemässe Bodengleitfahrzeug kann auch mit den Füssen gelenkt und/oder gebremst werden; um die Wirkung zu erhöhen, können an den Schuhen besondere Bremssohlen befestigt werden.

Für das Bodengleitfahrzeug können Mittel zur Befestigung an einem Skiliftbügel vorgesehen sein. Solche Mittel zur Befestigung werden vorzugsweise im vorderen Bereich des Bodengleitfahrzeuges auf Sitzhöhe, bspw. an den Mitteln zum Festhalten und/oder an der Stützkonstruktion, angebracht und sind vorzugsweise symmetrisch bezüglich der Längsachse. Ein Mittel zur Befestigung an einem Skiliftbügel könnte bspw. als Seilschlaufe ausgebildet sein, welche auf die oben beschriebene Weise am Bodengleitfahrzeug befestigt ist, um den Skiliftbügel geschlungen und vom Fahrer während der Skiliftfahrt festgehalten werden kann.

Um die Verletzungsgefahr insbesondere bei Stürzen zu verringern, weist das Bodengleitfahrzeug vorzugsweise keine scharfen Enden, Kanten oder Spitzen auf.

Im folgenden wird die Erfindung anhand von Figuren detailliert beschrieben. Dabei zeigen schematisch:
- Fig. 1: eine Seitenansicht des erfindungsgemässen Bodengleitfahrzeuges,
- Fig. 2 und 3: Seitenansichten zweier Ausführungsformen eines Bodengleitfahrzeuges mit Stossdämpfer, nicht gemäss des in den Patentansprüchen definierten Erfindung,
- Fig. 4: eine Draufsicht auf eine der Ausführungsformen von Fig. 1-3,
- Fig. 5: eine Seitenansicht einer weiteren Ausführungsform eines Bodengleitfahrzeuges, nicht gemäss der in den Patentansprüchen definierten Erfindung,
- Fig. 6: eine Draufsicht auf die Ausführungsform von Fig. 5,
- Fig. 7 und 8: Draufsichten auf zwei Ausführungsformen Bodengleitfahrzeuges, nicht gemäss der in den Patentansprüchen definierten Erfindung,
- Fig. 9: eine Seitenansicht einer Ausführungsform eines Bodengleitfahrzeuges und
- Fig. 10: eine Draufsicht auf die Ausführungsform von Fig. 9, nicht gemäss der in den Patentansprüchen definierten Erfindung.

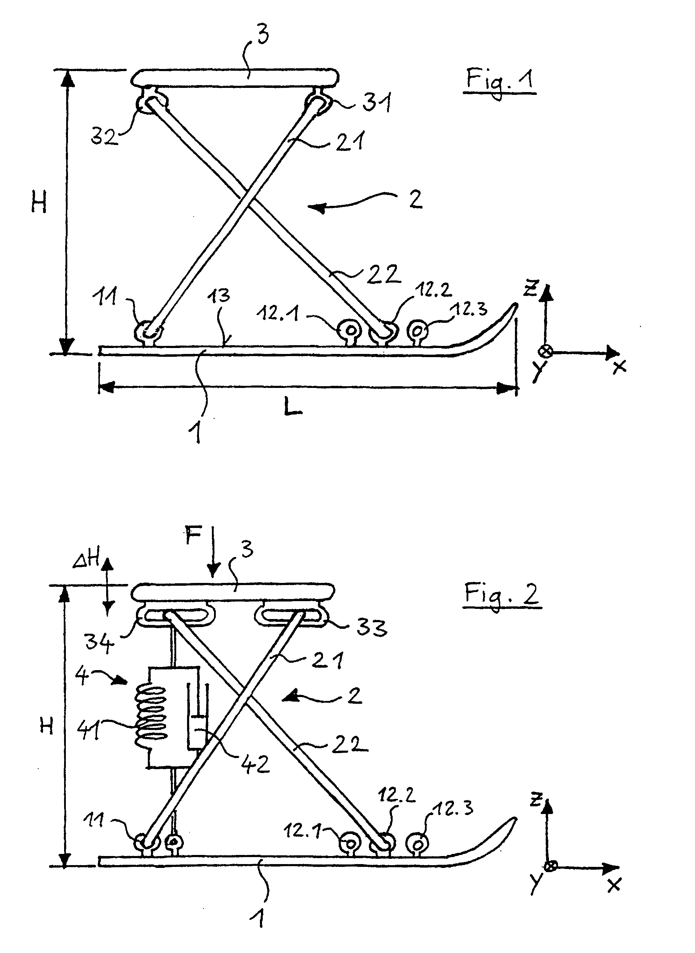

**Figur 1** zeigt schematisch ein erfindungsgemässes Bodengleitfahrzeug. Das Bodengleitfahrzeug weist einen dem Boden zugewandten Gleitteil 1, eine darauf aufgesetzte Stützkonstruktion 2 und eine an dieser Stützkonstruktion 2 angebrachte Sitzkonstruktion 3 auf. Die vorgesehene Fahrtrichtung entspricht in dieser Darstellung der (+x)-Richtung. "Vorn" bedeutet in dieser Schrift "in (+x)-Richtung, "hinten" bedeutet "in (-x)-Richtung". "Vertikal" bedeutet in dieser Schrift "in (+z)- oder (-z)-Richtung"; "oben" bzw. "unten" bedeutet "in (+z)-Richtung" bzw. "in (-z)-Richtung".

Der Gleitteil 1 der in Fig. 1 gezeigten beispielhaften Ausführungsform besteht aus genau eine Kufe. Der Gleitteil 1 kann eigens für das erfindungsgemässe Bodengleitfahrzeug konstruiert sein, oder aber er kann aus einem oder mehreren im Handel erhältlichen Skiern, Kurzskiern, Snowboards oder dergleichen bestehen. Vorteilhafterweise ist der Gleitteil 1 mit Verfahren und aus Materialien hergestellt, wie sie von Skiern her bekannt sind. Der Gleitteil 1 ist mindestens so lang, dass er in Längsrichtung x eine genügende Stabilität gewährt, jedoch höchstens so lang, dass das Bodengleitfahrzeug noch gut steuerbar ist. Die Länge L des Gleitteils 1 sollte daher die Bedingung 0.5 m ≤ L ≤ 1 m erfüllen; als besonders vorteilhaft haben sich Längen L mit 0.6 m ≤ L ≤ 0.8 m erwiesen.

Die Sitzkonstruktion 3 kann einem Motorrad- oder Fahrradsitz gleichen oder auch anders, bspw. aus einem Geflecht, gestaltet sein. Sie kann fakultativ mit einer Polsterung versehen sein.

Die Stützkonstruktion 2 als Verbindung zwischen dem Gleitteil 1 und der Sitzkonstruktion 3 besteht im Ausführungsbeispiel von Fig. 1 aus zwei Stützelementen 21 und 22, welche an Befestigungsstellen 11, 12.2, 31, 32 je mit dem Gleitteil 1 und der Sitzkonstruktion 3 verbunden sind. Die Stützelemente 21, 22 können bspw. aus Aluminium gefertigt sein. Die Sitzhöhe H bestimmt die Lage des Schwerpunkts von Fahrer und Bodengleitfahrzeug, welche für die Fahreigenschaften wesentlich ist. Gute Fahreigenschaften ergeben sich, wenn der Schwerpunkt 0.5-0.7 m über dem Boden liegt. Die Höhe H der Sitzkonstruktion 3 über dem Gleitteil 1 sollte daher die Bedingung 0.3 m ≤ H ≤ 0.6 m, vorzugsweise 0.4 m ≤ H ≤ 0.5 m, erfüllen.

Es ist vorteilhaft, wenn die Sitzhöbe H verstellbar ist, um sie Fahrern mit untereschiedlich langen Beinen anzupassen und/oder um das Bodengleitfahrzeug für das zu befahrende Gelände einzurichten. In der Ausführungsform von Fig. 1 kann die Sitzhöhe H bspw. verstellt werden, indem ein Stützelement 22 an verschiedenen Befestigungsstellen 12.1, 12.2, 12.3 (in x-Richtung nebeneinander angeordnet) auf dem Gleitteil 1 befestigbar ist. Voraussetzung dafür ist, dass die Stützelemente 21, 22 an den übrigen Befestigungsstellen 11, 31, 32 um eine Achse in Querrichtung, der y-Richtung, drehbar befestigt sind. Es könnte auch vorteilhaft sein, die Sitzposition in Längsrichtung (x-Richtung) bezüglich des Gleitteils 1 zu verstellen; für den Fachmann ist es einfach, eine solche Verstellmöglichkeit zu realisieren. Wird für den Gleitteil 1 ein im Handel erhältlicher (Kurz-)Ski verwendet, so kann ein (nicht dargestellter) Adapter für die Verbindung des Kurzskis mit der Stützkonstruktion vorgesehen werden. Der Adapter muss dann so gestaltet sein, dass er mit der vorhandenen Skibindung auf den Ski anscbnallbar ist.

Weiter ist es wünschenswert, dass das Bodengleitfahrzeug in z-Richtung zusammenklappbar, d. h. seine Höhe bzw. sein Volumen reduzierbar ist In zusammengeklapptem Zustand nimmt es weniger Volumen ein als in fahrbereitem Zustand. So kann es einfacher getragen und transportiert werden, bspw. in einem Rucksack. Das Bodengleitfahrzeug von Fig. 1 kann bspw. zusammengeklappt werden, indem ein Stützelement 22 vom Gleitteil 1 gelöst wird; die Sitzkonstruktion 3 kommt dann praktisch auf die Oberseite 13 des Gleitteils 1 zu liegen.

Während die Sitzkonstruktion 3 in der Ausführungsform von Fig. 1 im fahrbereiten Zustand starr mit dem Gleitteil 1 verbunden ist, ist sie in der Ausrührungsform von **Fig. 2** in z-Richtung zumindest um einige Zentimeter beweglich, d. h. die Sitzhöhe H ist in fahrbereitem Zustand um eine Strecke ΔH variabel. In y- und in z-Richtung ist die Sitzkonstruktion 3 hingegen unbeweglich. Dies wird bspw. durch Führungen 33, 34 an der Sitzkonstruktion 3, welche Bewegungen in x-Richcung der oberen Enden der Stützelemente 21, 22 erlauben, und durch Befestigungen 11, 12.2 am Gleitteil 1, welche Drehungen der Stützelemente 21, 22 um eine y-Achse erlauben, möglich.

Die Ausführungsform von Fig. 2 weist nun einen Stossdämpfer 4, bestehend aus einem Federelement 41 und einem Dämpfungselement 42, welche parallel angeordnet sind, auf. Das Federelement 4 übt eine Gegenkraft aus, sobald eine vertikal gerichtete Kraft F auf die Sitzkonstruktion 3 wirkt. Es überträgt Kräfte in z-Richtung zwischen dem Gleitteil 1 und der Sitzkonstruktion 3 und fängt somit heim Fahren von Bodenunebenheiten herrührende Schläge auf. Das Dämpfungselement 4 dämpft die dadurch verursachte Schwingung. Die Federwege können einige Zentimeter bis 20 cm betragen. Solche Stossdämpfer 4 sind vom Fahrzeugbau her bekannt. Ganz ähnliche Anforderungen bezüglich Feder- sowie Dämpfungseigenschaften, Robustheit etc. werden bspw. an Federungen von Geländefahrrädern ("Mountain bikes"), insbesondere solchen für Abfahrten ("Downhill"), gestellt. Auf das Dämpfungselement 4 könnte verzichtet werden, was eine einfachere, kostengünsitgere, aber weniger bequeme Ausführungsform ergäbe.

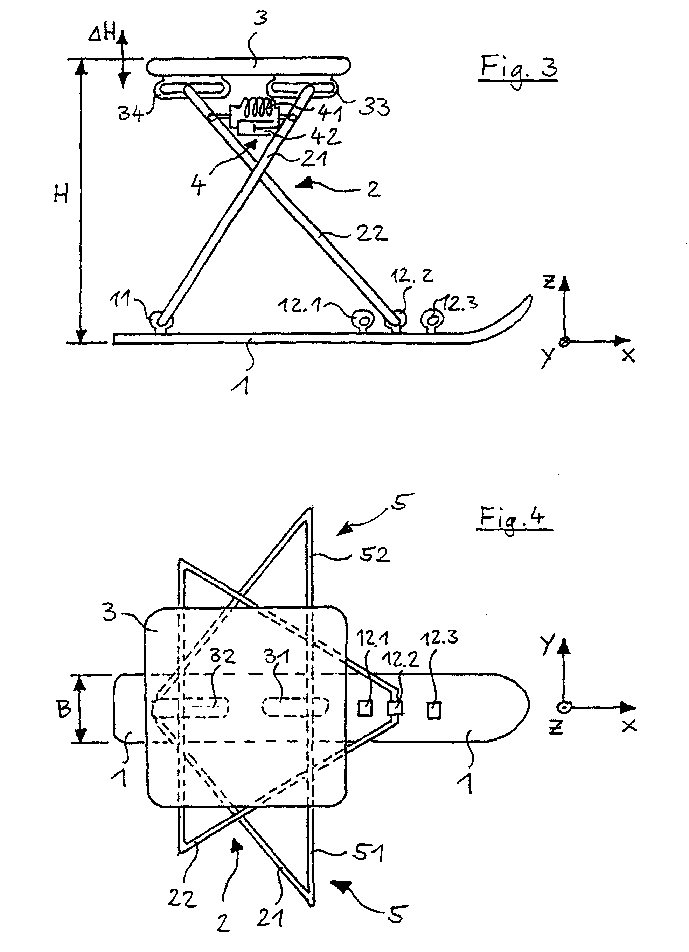

Selbstverständlich können die Stützkonstruktion 2 und der Stossdämpfer 4 anders als in Fig. 2 gestaltet und/oder angeordnet sein. Ein Beispiel für eine geringfügige Variation der Ausführungsform von Fig. 2 zeigt **Fig. 3**. Hier ist der Stossdämpfer 4 zwischen den Stützelementen 21, 22 angebracht, was eine ähnliche Wirkung ergibt wie die Anordnung von Fig. 2. Während das Federelement 41 in Fig. 2 auf Druck belastet ist, ist es in Fig. 3 auf Zug belastet.

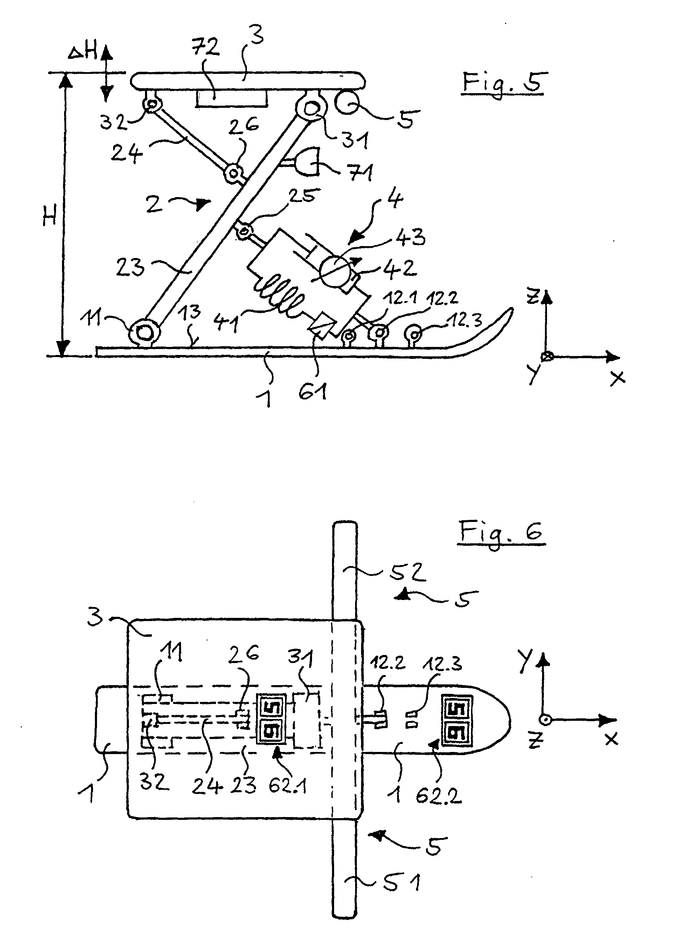

**Figur** 4 zeigt eine schematische Draufsicht auf eine der Ausführungsformen der Figuren 1-3, wobei der Stossdämpfer 4 der Einfachheit halber nicht dargestellt ist. Um die Stützkonstruktion 2 besser zu zeigen, ist die Sitzkonstruktion 3 in Fig. 4 durchsichtig gezeichnet. Die Stützkonstruktion 2 besteht aus zwei trapezförmigen, ineinandergesetzten Stützelementen 21, 22, welche bspw. aus Aluminiumrohren hergestellt sind.

Die Breite B des Gleitteils 1 entspricht ungefähr derjenigen eines gewöhnlichen Skis und sollte bei Belastung durch eine Person ein übermässiges Einsinken in die Unterlage, bspw. in Schnee, verhindern. Für Schnee sollte die Breite B des Gleitteils 1 sollte die Bedingung 8 cm ≤ B ≤ 20 cm, vorzugsweise 10 cm ≤ B ≤ 13 cm, erfüllen. Selbstverständlich kann die Gleitteilbreite B(x) auch mit der Längskoordinate x variieren.

Das erfindungsgemässe Bodengleitfahrzeug ist mit Mitteln 5 zum Festhalten versehen, welche es dem Fahrer erlauben, sich während der Fahrt am Bodengleitfahrzeug zu halten und/oder das Bodengleitfahrzeug leichter zu steuern. In der Ausführungsform von Fig. 4 bestehen die Mittel 5 zum Festhalten aus zwei Griffen 51 und 52, welche auf der Höhe der Sitzkonstruktion 3, je links und rechts der Sitzkonstruktion 3, an der Stützkonstruktion 2 angeordnet sind. Hier sind die Griffe 51, 52 in y-Richtung verlaufende Teile eines Stützelementes 21. Sie sind also direkt aus der Stützkonstruktion 2 herausgeformt, was natürlich nicht notwendigerweise der Fall sein muss. Die Mittel 5 zum Festhalten sind vorzugsweise im vorderen Bereich des Bodengleitfahrzeuges, also am Vorderteil der Stützkonstruktion 2 oder vor der Sitzkonstruktion 3, angebracht.

Eine weitere beispielhafte Ausführungsform eines Bodengleitfahrzeuges ist schematisch in den **Figuren 5 und 6** dargestellt. Die Stützkonstruktion 2 hesteht hier aus einem Arm 23, dessen unteres Ende mit Hilfe eines Scharniers 11 an der Oberseite 13 des Gleitteils 1 befestigt ist. Der Arm 23 besteht bspw. aus Holz. An einem oberen Ende des Arms ist die Sitzkonstruktion 3 befestigt, bspw. gestützt durch ein zusätzliches Stützelement 24. Der Arm 23 wird von einem am Gleitteil 1 befestigten, auf Druck belasteten Stossdämpfer 4 gestützt. Die Sitzhöhe H kann auch hier verstellt werden, indem bspw. die Befestigung des Stossdämpfers 4 am Gleitteil 1 an mehreren x-Positionen 12.1, 12.2, 12.3 möglich ist. Auch diese Ausführungsform ist leicht zusammenklappbar, indem bspw. die Verbindung 25 zwischen dem Stossdämpfer 4 und dem Arm 23 oder die Verbindung 12.2 zwischen dem Stossdämpfer 4 und dem Gleitteil 1 und gleichzeitig eine der Verbindungen 26, 32 des zusätzlichen Stützelementes 24 gelöst wird.

Der Stossdämpfer 4 könnte auch durch ein starres Stützelement ersetzt werden.

Die Mittel 5 zum Festhalten sind in dieser Ausführungsform an der Sitzkonstruktion 3 angeordnet; sie könnten aber bspw. auch am Arm 23 befestigt sein.

Der Stossdämpfer 4 kann mit einem Verstellmechanismus 43 versehen sein, mit welchem mechanische Eigenschaften des Stossdämpfers 4 wie Federung und/oder Dämpfung verstellbar sind. Zu diesem Zweck kann der Verstellmechanismus 43 zugeordnete Verstellelemente wie von Hand einzustellende Schrauben oder Motoren enthalten. Mit dem Verstellmechanismus 43 kann bspw. der Stossdämpfer 4 auf ein bestimmtes Fahrergewicht, einen besonderen Fahrstil, ein zu befahrendes Gelände etc. eingestellt und optimiert werden. Solche Möglichkeiten können insbesondere für eine Anwendung im Rennsport wichtig sein.

Das Bodengleitfahrzeug kann mindestens einen Sensor 61 aufweisen. Dabei kann es sich bspw. um einen an der Stützkonstruktion 2 angebrachten Kraft- oder Drucksensor handeln, welcher das Fahrergewicht aufnimmt und in ein entsprechendes elektrisches Signal umwandelt. Ein solches Sensorsignal könnte verwendet werden, um den Verstellmechanismus 43 zu verstellen bzw. als Regelgrösse zu regeln. Der Sensor 61 könnte aber auch andere Grössen wie z. B. die Luft- oder die Schneetemperatur, die Luftfeuchtigkeit, den Luftdruck, die Höhe über Meer, die Fahrgeschwindigkeit, die Sonneneinstrahlung etc. messen.

Ferner kann das Bodengleitfahrzeug mit mindestens einer Anzeige 62.1, 62.2 ausgestattet sein. Diese kann sich bspw. in bzw. auf der Sitzkonstruktion 3 (62.1) und/oder in bzw. auf dem Gleitteil 1 (62.2) befinden. Die Anzeige 62.1, 62.2 ist vorzugsweise digital. Sie zeigt bspw. die vom Sensor 61 gemessene Werte von einer oder mehreren physikalischen Grössen, die Uhrzeit oder andere Informationen an.

Am erfindungsgemässen Bodengleitfahrzeug kann auch mindestens eine Lichtquelle 71, bspw. ein nach vorn leuchtender Scheinwerfer, angebracht sein. Eine solche Lichtquelle 71 könnte insbesondere bei Nachtfahrten vorteilhaft sein, um z. B. das zu befahrende Gelände auszuleuchten. Die Lichtquelle 71 kann von einer Batterie 72 gespiesen werden. Die Batterie 72 kann mit Strom aus einer Steckdose oder auch aus Solarzellen, welche sich bspw. im Bereich der Anzeige 62.2 befinden können, aufgeladen werden.

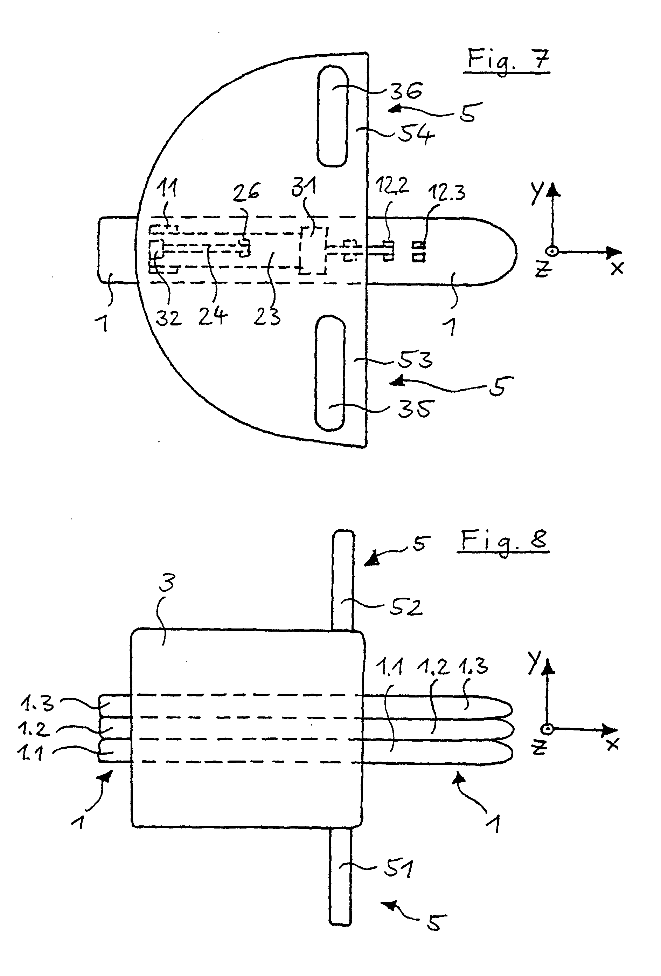

Eine weitere Ausführungsform eines Bodengleitfahrzeuges ist in einer schematischen Draufsicht in **Figur 7** dargestellt. Dabei können der Gleitteil 1, die Stützkonstruktion 2 und ein eventueller Stossdämpfer 4 gleich sein wie in der Ausführungsform der Figuren 5 und 6. Anders gestaltet sind hingegen die Sitzkonstruktion 3 und die Mittel 5 zum Festhalten. Im breiten Vorderteil des Sitzes 3 sind seitlich zwei Löcher 35, 36 angebracht. Der Fahrer kann sich also an den vorderen Begrenzungen 53, 54 dieser Löcher 35, 36 festhalten; die Mittel 5 zum Festhalten sind somit direkt aus der Sitzkonstruktion 3 herausgeformt. In dieser Ausführungsform muss der Vorderteil der Sitzkonstruktion 3 so breit gestaltet sein, dass sich der Fahrer beim Sitzen noch mit den Händen halten kann, dass also Gesäss bzw. Oberschenkel des Fahrers zwischen den Griffen 53, 54 Platz haben.

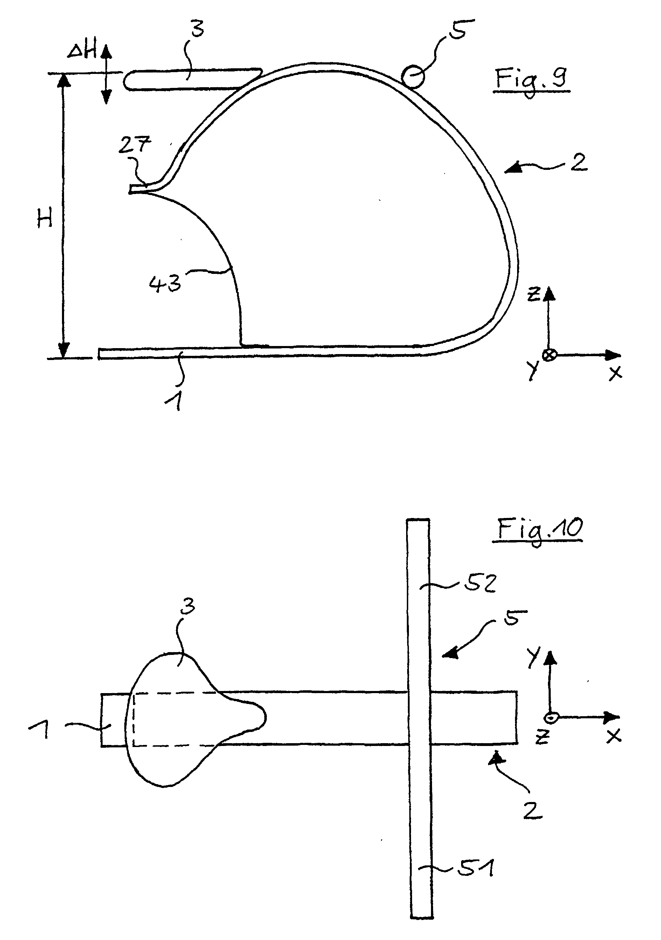

In **Figur 8** ist eine Ausführungsform eines Bodengleitfahrzeuges dargestellt, bei welcher der Gleitteil 1 mehrere, bspw. drei, unmittelbar nebeneinander angeordnete Kufen 1.1, 1.2, 1.3 aufweist. Eine solche Anordnung von zwei oder mehr unmittelbar nebeneinander angeordneten Kufen 1.1-1.3 kann den Vorteil einer grösseren seitlichen Stabilität gegenüber einer einzigen Kufe bieten. Ansonsten gleicht diese Ausführungsform derjenigen der Figuren 5 und 6. Die Stützkonstruktion 2 ist in Fig. 8 der Übersichtlichkeit halber nicht mehr eingezeichnet.

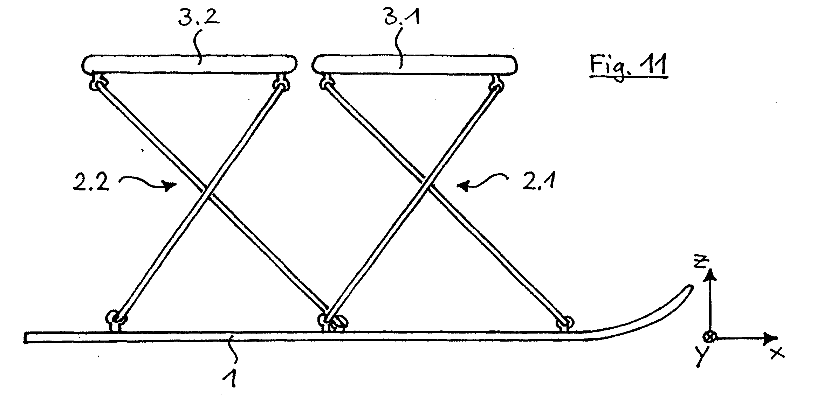

**Figuren 9 bzw. 10** zeigen schematisch eine Seitenansicht bzw. eine Draufsicht auf eine weitere Ausführungsform eines Bodengleitfahrzeuges. Hier gehen der Gleitteil 1 und die bogenförmige Stützkonstruktion 2 ohne Unterbruch ineinander über, was zu einem besonders eleganten Erscheinungsbild beiträgt. Sie können aus einem Stück, bspw. aus Holz, gefertigt sein. Das freie Ende 27 der Stützkonstruktion 2 kann mit einem Federelement 43, in diesem Fall bspw. mit einer gebogenen einfachen Blattfeder aus Metall, abgestützt sein. Natürlich ergibt schon die bogenförmige Stützkonstruktion 2 allein eine Federwirkung, so dass diese Ausführungsform mit zwei Federelementen 43, 2 ausgerüstet ist.

Die Sitzkonstruktion 3 der Ausführungsform von Fig. 9 und 10 ist als Fahrradsitz ausgebildet und ist direkt an der Stützkonstruktion 2 befestigt. Die Mittel 5 zum Festhalten sind ebenfalls direkt an der Stützkonstruktion 2 befestigt. Sie liegen, wie in den oben beschriebenen Ausführungsformen, ungefähr auf Sitzhöhe, jedoch um einiges weiter vorn als die Sitzkonstruktion 3. Die Position der Sitzkonstruktion 3 und der Mittel 5 zum Festhalten lässt sich mit einfachen, hier nicht dargestellten Mitteln in x-Richtung und/oder in z-Richtung verstellen.

In **Figur 11** ist schliesslich eine "Tandem"-Ausführungsform eines Bodengleitfahrzeuges dargestellt. Diese weist zwei auf dem Gleitteil 1 aufgesetzte Stützkonstruktionen 2.1, 2.2 und zwei an den Stützkonstruktionen 2.1, 2.2 angebrachte Sitzkonstruktionen 3.1, 3.2 auf. Weitere Details wie Mittel zum Festhalten, Stossdämpfer, Sensor oder Anzeige sind in Fig. 11 nicht eingezeichnet, könnten aber durchaus vorhanden sein. In einer anderen Ausführungsform können auch zwei Sitzkonstruktionen auf einer einzigen Stützkonstruktion angebracht sein.

Bei Kenntnis der Erfindung ist es dem Fachmann möglich, eine Vielzahl von weiteren Ausführungsformen des erfindungsgemässen Bodengleitfahrzeuges zu konstruieren.

## Patentansprüche

1. Bodengleitfahrzeug mit einem dem Boden zugewandten Gleitteil (1), einer darauf aufgesetzten, zusammenklappbaren Stützkonstruktion (2), einer an dieser Stützkonstruktion (2) angebrachten Sitzkonstruktion (3) und mit an der Stütz- und/oder Sitzkonstruktion angebrachten Mitteln zum Festhalten (5), **dadurch gekennzeichnet, dass** die Mittel zum Festhalten (5) beidseitig, unterhalb oder auf der Höhe der Sitzkonstruktion (3) angeordnet sind und dass die Stützkonstruktion (2) derart ausgebildet ist, dass sie in Längsrichtung (x) und in der Querrichtung (y) eine starre Verbindung zwischen der Sitzkonstruktion (3), resp. den Mitteln zum Festhalten (5) und dem Gleitteil (1) bildet.

2. Bodengleitfahrzeug nach Anspruch 1, **dadurch gekennzeichnet, dass** die Sitzkonstruktion (3) eine Breite aufweist, die Gesäss und Oberschenkel stützt.

3. Bodengleitfahrzeug nach einem der vorangehenden Ansprüchen, **dadurch gekennzeichnet, dass** die Länge (L) des Gleitteils (1) zwischen 0.5 m und 1 m und die Breite (B) des Gleitteils (1) zwischen 8 cm und 20 cm beträgt.

## Claims

1. Ground gliding vehicle with a gliding part (1) facing the ground, a foldable supporting structure (2) placed upon it, a seating structure (3) attached to the supporting structure (2) and means (5) for holding on attached to the seating and/or supporting structure, **characterized in that** the means (5) for holding on are arranged below or on the same level as the seating structure (3) on both sides of it, that the supporting structure (2) is built such that it forrns a rigid connection in longitudinal x-direction and in transverse y-direction between the seating structure (3) or the means for holding and the gliding part (1) respectively.

2. Ground gliding vehicle according to claim 1, **characterized in that** the seating structure (3) has a width supporting buttocks and thighs.

3. Ground gliding vehicle according to one of the preceding claims, **characterized in that** the length (L) of the gliding part (1) is between 0.5 m and 1 m and the width (B) of the gliding part (1) is between 8 cm and 20 cm.

## Revendications

1. Véhicule se déplaçant par glissement sur le sol, avec une partie de glissement (1) tournée vers le sol et sur laquelle est placée une structure d'appui (2) rabattable, une structure de siège (3) installée sur cette structure d'appui (2) et des moyens pour se tenir (5) installés sur la structure d'appui (2) et/ou sur la structure de siège (3), **caractérisé en ce que** les moyens pour se tenir (5) sont disposés des deux côtés, en dessous ou à la hauteur de la structure de siège (3) et **en ce que** la structure d'appui (2) est configurée de manière à former, dans le sens de la longueur (x) et dans le sens transversal (y), une liaison rigide entre la structure de siège (3), respectivement entre les moyens pour se tenir (5), et la partie de glissement (1).

2. Véhicule se déplaçant par glissement sur le sol selon la revendication 1, **caractérisé en ce que** la largeur de la structure de siège (3) soutient le bassin et les cuisses.

3. Véhicule se déplaçant par glissement sur le sol selon l'une des revendications précédentes, **caractérisé en ce que** la longueur (L) de la partie de glissement (1) est comprise entre 0,5 m et 1 m, la largeur (B) de la partie de glissement (1) étant comprise entre 8 cm et 20 cm.
